(19) **Europäisches Patentamt**
**European Patent Office**
**Office européen des brevets**

(11) **EP 2 147 288 B1**

(12) **EUROPÄISCHE PATENTSCHRIFT**

(45) Veröffentlichungstag und Bekanntmachung des Hinweises auf die Patenterteilung:
**23.04.2014 Patentblatt 2014/17**

(21) Anmeldenummer: **07724985.2**

(22) Anmeldetag: **08.05.2007**

(51) Int Cl.:
***G01J 5/22*** *(2006.01)*

(86) Internationale Anmeldenummer:
**PCT/EP2007/004061**

(87) Internationale Veröffentlichungsnummer:
**WO 2008/135068 (13.11.2008 Gazette 2008/46)**

(54) **VORRICHTUNG UND VERFAHREN ZUR ERFASSUNG VON ELEKTROMAGNETISCHER STRAHLUNG**

DEVICE AND METHOD FOR DETECTING ELECTROMAGNETIC RADIATION

PROCÉDÉ ET DISPOSITIF DE SAISIE DE RAYONNEMENT ÉLECTROMAGNÉTIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**27.01.2010 Patentblatt 2010/04**

(73) Patentinhaber: **Fraunhofer-Gesellschaft zur Förderung der angewandten Forschung e.V.
80686 München (DE)**

(72) Erfinder:
• **HUPPERTZ, Jürgen
47119 Duisburg (DE)**
• **HOSTICKA, Bedrich
45478 Mülheim an der Ruhr (DE)**

• **WÜRFEL, Daniel
45966 Gladbeck (DE)**

(74) Vertreter: **Schenk, Markus et al
Schoppe, Zimmermann, Stöckeler & Zinkler
Patentanwälte
Postfach 246
82043 Pullach bei München (DE)**

(56) Entgegenhaltungen:
**EP-A- 0 139 408     US-A- 5 952 659**

• **FREEMAN D SHEPHERD ET AL: "Application of Schottky barrier bolometer arrays to cooled sensors" PROCEEDINGS OF THE SPIE, SPIE, BELLINGHAM, VA, US, Bd. 4130, 2000, Seiten 86-93, XP007903899 ISSN: 0277-786X**

EP 2 147 288 B1

**Beschreibung**

Die vorliegende Erfindung betrifft Vorrichtungen und Verfahren zur Erfassung elektromagnetischer Strahlung, insbesondere zur Erfassung einer Energie- bzw. Leistungsdichte elektromagnetischer Strahlung.

Elektromagentische Wellen können beispielsweise mit Hilfe eines so genannten Bolometers erfasst werden. Ein Bolometer umfasst einen Strahlungssensor, der abgestrahlte Energie- bzw. Leistungsdichte von meist schwachen Licht-, Infrarot-, Ultraviolett- oder Mikrowellen-Quellen detektieren kann, indem es eine durch Absorption stattfindende Erwärmung des Strahlungssensors registriert.

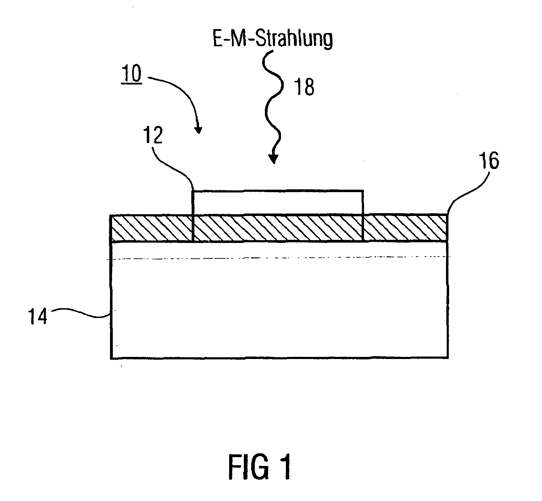

Ein schematischer Aufbau eines Bolometers ist in Fig. 1 gezeigt.

Das Bolometer 10 weist einen Strahlungssensor 12 inklusive eines Absorbers auf, der auf einem Substrat 14 angebracht ist. Zwischen dem Absorber und dem Substrat 14 befindet sich üblicherweise eine Isolationsschicht 16 zur thermischen Isolation des Absorbers von dem Substrat 14. Dabei kann die thermische Isolation beispielsweise durch ein Vakuum erfolgen, d.h. der Absorber ist von dem Substrat 14 in einem Abstand d angeordnet. Dies kann beispielsweise dadurch realisiert werden, indem der Absorber durch Abstandshalter, welche gleichzeitig als Elektroden fungieren können, über dem Substrat 14 aufgehängt ist. Zwischen dem Absorber und Substrat 14 kann, wie in Fig. 1 angedeutet, ein zusätzliches Isolationsmaterial 16 vorgesehen sein, um eine besondere thermische Isolation zu erreichen. Durch einfallende elektromagnetische Strahlung 18 erhöht sich die Temperatur des Absorbers gegenüber dem Substrat 14. Temperaturänderungen des Absorbers werden dann durch eine Wärmeerfassungsstruktur des Strahlungssensors 12 erfasst, und damit mittelbar die eingetroffene Strahlungsmenge. Beispielsweise wird in Zusammenwirkung mit dem Absorber 12 eine Diode oder ein temperaturabhängiger Widerstand verwendet, die bzw. der durch die Erwärmung des Absorbers die Strom-Spannungs-Charakteristik ändert.

Elektromagnetische Strahlungsquellen können beispielsweise astronomische Objekte sein. Ein wesentliches Kennzeichen eines Bolometers gegenüber anderen Strahlungsdetektoren, wie beispielsweise Photozellen oder Photodioden, ist eine breitbandige Empfangscharakteristik sowie eine Möglichkeit zur Detektion nur schwer oder nicht nachweisbarer Strahlung, wie beispielsweise ferne Infrarot- oder Terahertzstrahlung.

Je nach Wellenlänge einer zu untersuchenden Strahlungsquelle, sowie Reaktionszeit und Empfindlichkeit eines Bolometers, werden unterschiedliche Strahlungssensoren bzw. Absorber 12 benutzt. Üblich sind z.B. dünne, frei aufgehängte, absorbierende Metallbänder, frei aufgehängte kleine Thermistoren, Dünnschichtstrukturen für kurze Reaktionszeiten oder supra-leitfähige Sensoren für sehr hohe Empfindlichkeiten.

Die durch die elektromagnetische Strahlung 18 hervorgerufene Wärmewirkung verändert beispielsweise einen temperaturabhängigen ohmschen Widerstand R(T) des Sensors bzw. Absorbers 12. Der Widerstand R(T) kann mit einer am Absorber anliegenden Spannung beispielsweise mittels eines Strommessgeräts gemessen werden. Damit können Rückschlüsse auf die Leistungsdichte der absorbierten elektromagnetischen Strahlung 18 gezogen werden. Der temperaturabhängige ohmsche Widerstandswert R(T) eines mit dem Absorber zusammenwirkenden bzw. thermisch gekoppelten Widerstands, kann im Allgemeinen gemäß

$$R(T) = R_0 \cdot (1 + \alpha(T - T_0)) \qquad\qquad (1)$$

geschrieben werden, wobei $R_0$ einen Nennwiderstand bei einer Nenntemperatur $T_0$ bedeutet. $\alpha$ bezeichnet einen Temperaturkoeffizienten des temperaturabhängigen Widerstands R(T).

Bei der Fertigung von Sensoren bzw. Absorbern 12 treten im Allgemeinen sowohl beim Nennwiderstand $R_0$ als auch beim Temperaturkoeffizienten $\alpha$ Toleranzen auf. Aus diesem Grund müssen die Sensoren 12 kalibriert werden. Insbesondere bei bildgebenden Systemen mit einer Vielzahl von Pixeln führt dies zu großen Kalibriertabellen, die gespeichert werden müssen.

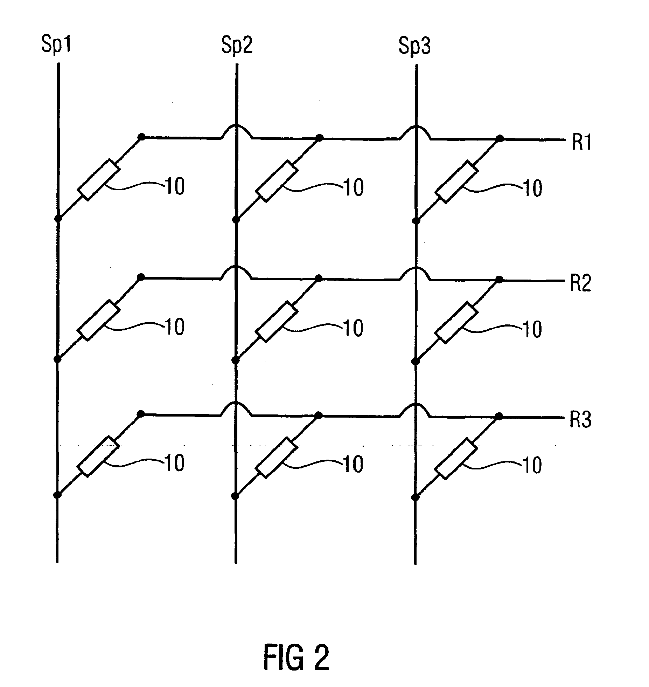

Eine Anordnung einer Mehrzahl von Bolometern 10 in einer Matrix für ein bildgebendes System ist beispielhaft in Fig. 2 gezeigt.

Fig. 2 stellt exemplarisch eine 3x3-Matrix aus Bolometern 10 dar, wobei jedes Bolometer 10 einem Bildpunkt bzw. Pixel entspricht. Ein bestimmtes Bolometer 10, d.h. ein bestimmter Pixel, kann in dem in Fig. 2 dargestellten System durch Auswahl einer Spalte und einer Reihe der Matrix angesteuert bzw. ausgelesen werden.

Bei Absorbern bzw. Sensoren 12, deren Temperatur T nicht konstant gehalten wird, um beispielsweise eine Temperaturregelung einzusparen, gibt es für verschiedene Temperaturbereiche, z.B. im Abstand von einigen Grad Celsius, eigene Kalibrierdaten. Diese Daten müssen bei bildgebenden Systemen durch eine Kalibrierung für jedes Bolometer 10 individuell ermittelt und gespeichert werden.

In vielen Fällen reicht es nicht aus, mit einem bildgebenden System (wie es in Fig. 2 exemplarisch dargestellt ist) ermittelte Bilder nur mit Hilfe der Kalibrierdaten zu korrigieren. Vielmehr muss zusätzlich zeitlich periodisch ein Offset-Abgleich erfolgen. Dazu wird ein Bolometer 10 abgedeckt, indem beispielsweise eine Platte, ein so genannter Shutter, vor das Bolometer 10 geschwenkt wird, um es von der elektromagnetischen Strahlung abzuschirmen. Beispielsweise werden intermittierend alle Bolometer durch den Shutter abgedeckt. Insbesondere können Referenzbilder erzeugt werden, aus denen der Offset (z.B. der Nennwiderstand $R_0$) bestimmt werden kann. Während dieser Zeit kann keine Bilderfassung erfolgen.

Vereinzelt werden bei Bolometern Absorber auch in Verbindung mit thermisch gekoppelten Dioden verwendet. Dabei wird eine Temperaturabhängigkeit der Durchlass- bzw. Diodenspannung $U_D$ gemäß

$$U_D(T) = \frac{kT}{q} \cdot \ln \frac{I_D(T)}{I_S(T)} \qquad\qquad (2)$$

genutzt, wobei T die mit dem Absorber gekoppelte Temperatur der Diode bedeutet, k = 1,38 * 10$^{-23}$ J/K die Boltzmann-Konstante, q die Elementarladung, $I_D(T)$ einen temperaturabhängigen Diodenstrom und $I_S(T)$ einen temperaturabhängigen Diodensperrstrom bedeutet. Der Diodensperrstrom $I_S(T)$, also der Strom durch eine in Sperrrichtung betriebene Diode, ist fertigungsabhängig und verursacht eine Offsetspannung, welche kompensiert werden muss. Dies geschieht in der Regel durch Kalibrierung.

Wünschenswert wären Strahlungsdetektoren bzw. Bolometer, bei denen keine Kalibrierung bzw. Offsetmessung oder weniger Kalibrieraufwand nötig ist.

Die Aufgabe der vorliegenden Erfindung besteht somit darin, Vorrichtungen und Verfahren zur Erfassung von elektromagnetischer Strahlung zu schaffen, die keine oder weniger Kalibrierung oder Offsetmessung benötigen.

Diese Aufgabe wird durch eine Vorrichtung mit den Merkmalen des Patentanspruchs 1 und ein Verfahren gemäß Patentanspruch 17 gelöst.

Der vorliegenden Erfindung liegt die Erkenntnis zugrunde, dass ein Messwert für die absorbierte elektromagnetische Strahlung ermittelt werden kann, indem wenigstens zwei zeitlich aufeinander folgende Strom- und/oder Spannungsmessungen an einer absorbierenden Diodenstruktur mit unterschiedlichen vordefinierten Spannungen an bzw. unterschiedlichen vordefinierten Strömen durch die zugrundeliegende Diode der Diodenstruktur durchgeführt werden. Der Messwert, der gemäß Ausführungsbeispielen eine Temperatur der Diode sein kann, wird gemäß Ausführungsbeispielen mit Hilfe der Temperaturabhängigkeit zwischen Diodenspannung $U_D(T)$ und Diodenstrom $I_D(T)$ bestimmt. Durch eine Relativbetrachtung der Messergebnisse der zeitlich aufeinander folgenden Strom- und/oder Spannungsmessungen kann der fertigungsabhängige Diodensperrstrom $I_S(T)$ und die dadurch verursachte Offsetspannung herausgerechnet und die Temperatur der Diode bestimmt werden.

Gemäß einem ersten Ausführungsbeispiel wird dazu ein eingeprägter Diodenstrom $I_D$ variiert und es werden jeweils die resultierenden temperaturabhängigen Diodenspannungen $U_D(T)$ gemessen.

Bei einer weiteren Ausführungsform werden an die Diode nacheinander unterschiedliche Diodenspannungen $U_D$ angelegt und die daraus resultierenden temperatur- und spannungsabhängigen Diodenströme $I_D(U_D,T)$ jeweils gemessen.

Bei der Diode kann es sich gemäß Ausführungsbeispielen beispielsweise um eine PN-Diode, eine Schottky-Diode oder eine durch organische Halbleiter gebildete Diode handeln. Ein als Diode geschalteter Bipolartransistor ist ebenfalls möglich.

Durch die wenigstens zwei zeitlich aufeinander folgenden Messungen kann der fertigungsabhängige Sperrstrom $I_S(T)$ der Diode und die damit einhergehende Offsetspannung herausgerechnet werden.

Ein Vorteil der vorliegenden Erfindung besteht somit darin, dass ein Bolometer gemäß Ausführungsbeispielen der vorliegenden Erfindung gegebenenfalls sogar ohne vorherige Kalibrierung des Sensors bzw. Absorbers (Diode) und ohne Messung der Offsetspannung während des Betriebs ausgelesen werden kann. Dadurch brauchen keine oder zumindest weniger umfangreichen Kalibriertabellen abgespeichert werden, d.h. der Speicheraufwand beispielsweise bei bildgebenden Systemen kann durch die vorliegende Erfindung erheblich reduziert werden.

Vorteilhafte Ausführungsformen und Weiterbildungen sind Gegenstand der Unteransprüche.

Bevorzugte Ausführungsbeispiele der vorliegenden Erfindung werden nachfolgend Bezug nehmend auf die beiliegenden Zeichnungen näher erläutert. Es zeigen:

Fig. 1      eine schematische Darstellung eines Aufbaus eines Bolometers;

Fig. 2      eine schematische Darstellung eines 3x3-Sensorarrays mit Bolometern;

Fig. 3      ein schematisches Flussdiagramm zur Erläuterung eines Verfahrens zur Erfassung von elektromagnetischer Strahlung gemäß einem Ausführungsbeispiel der vorliegenden Erfindung;

Fig. 4    ein schematisches Blockdiagramm einer Vorrichtung zur Erfassung von elektromagnetischer Strahlung gemäß einem Ausführungsbeispiel der vorliegenden Erfindung;

Fig. 5    ein Flussdiagramm zur Erläuterung eines Verfahrens zur Erfassung von elektromagnetischer Strahlung gemäß einem Ausführungsbeispiel der vorliegenden Erfindung;

Fig. 6    ein schematisches Blockdiagramm einer Vorrichtung zur Durchführung des Verfahrens nach Fig. 5;

Fig. 7    ein Flussdiagramm eines Verfahrens zur Erfassung von elektromagnetischer Strahlung gemäß einem weiteren Ausführungsbeispiel der vorliegenden Erfindung;

Fig. 8    ein schematisches Blockdiagramm einer Vorrichtung zur Durchführung des Verfahrens nach Fig. 7;

Fig. 9    eine Darstellung eines Temperatur- und Messverlaufs bei einem Verfahren gemäß einem Ausführungsbeispiel der vorliegenden Erfindung;

Fig. 10    eine schematische Darstellung eines aktiven und blinden Bolometers gemäß einem Ausführungsbeispiel der vorliegenden Erfindung; und

Fig. 11    eine Raumansicht einer über einem Substrat aufgespannten Diodenstruktur.

Bezüglich der nachfolgenden Beschreibung sollte beachtet werden, dass bei den unterschiedlichen Ausführungsbeispielen gleiche oder gleichwirkende Funktionselemente gleiche Bezugszeichen aufweisen und somit die Beschreibung dieser Funktionselemente bei verschiedenen im Nachfolgenden dargestellten Ausführungsbeispielen untereinander austauschbar sind.

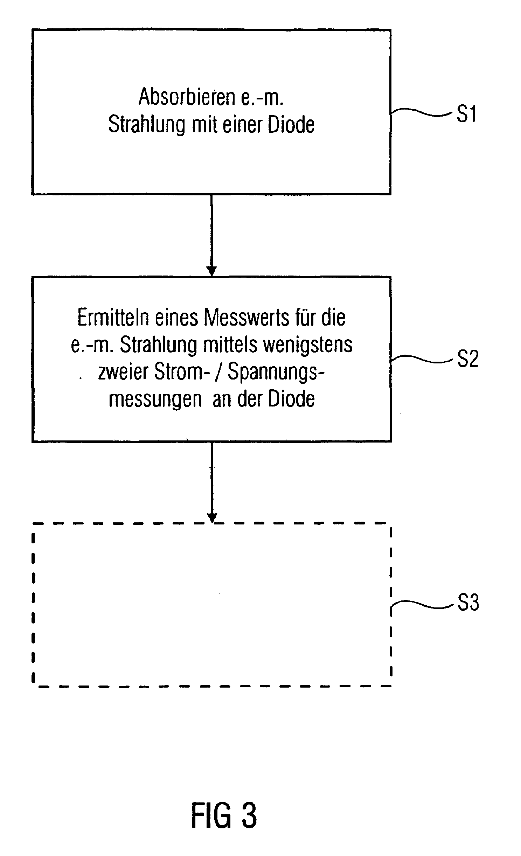

Fig. 3 zeigt schematisch ein Flussdiagramm eines Verfahrens zur Erfassung von elektromagnetischer Strahlung gemäß einem Ausführungsbeispiel der vorliegenden Erfindung.

In einem ersten Schritt S1 wird in einer Diodenstruktur, die als Absorber wirkendes strahlungsabsorbierendes Material sowie eine Diode aufweist, eine zu detektierende elektromagnetische Strahlung absorbiert. In einem zweiten Schritt S2 wird für die absorbierte elektromagnetische Strahlung mittels wenigstens zweier zeitlich aufeinander folgender Strom- und/oder Spannungsmessungen an der Diode für unterschiedliche Paare $I_{D,1}$, $I_{D,2}$, $U_{D,1}$, $U_{D,2}$ eines Diodenstroms und einer Diodenspannung ein Messwert ermittelt, wobei die Abhängigkeit der Strom-Spannungs-Charakteristik der Diode von der Temperatur T der Diode ausgenutzt wurde, die sich wiederum über die Kopplung mit dem Absorbermaterial abhängig von der elektromagnetischen Strahlung ändert. In einem optionalen dritten Schritt S3 kann aus dem ermittelten Messwert, welcher beispielsweise einen Zwischenwert zur Ermittlung der Energie- bzw. Leistungsdichte der elektromagnetischen Strahlung darstellen kann, die Energie- und/oder Leistungsdichte ermittelt werden.

Gemäß Ausführungsbeispielen der vorliegenden Erfindung handelt es sich bei dem Messwert um eine Temperatur T der Diode der Diodenstruktur, welche als Absorber für die elektromagnetische Strahlung dient. Möglich ist ebenso eine Temperaturdifferenz $\Delta T$ zwischen der die elektromagnetische Strahlung absorbierenden Diodenstruktur und einem Substrat, auf dem die Diodenstruktur angebracht ist.

Die Temperatur T der Diode wird mit Hilfe der Temperaturabhängigkeit zwischen der Diodenspannung $U_D$ und dem Diodenstrom $I_D$ bestimmt. Dazu kann gemäß einer Ausführungsform der Diodenstrom $I_D$ zeitlich aufeinander folgend variiert werden, d.h. es können zeitlich aufeinander folgend der Diode zwei vordefinierte Diodenströme $I_{D,1}$ und $I_{D,2}$ eingeprägt werden und daraufhin die jeweils resultierenden Diodenspannungen $U_{D,1}$ und $U_{D,2}$ gemessen werden. Gemäß einer weiteren Ausführungsform können zeitlich aufeinander folgend zwei vordefinierte Diodenspannungen $U_{D,1}$ und $U_{D,2}$ an die Diode angelegt werden und daraufhin jeweils die resultierenden Ströme $I_{D,1}$ und $I_{D,2}$ gemessen werden.

Basierend auf den Spannungen $U_{D,1}$, $U_{D,2}$ und Strömen $I_{D,1}$, $I_{D,2}$ kann die Temperatur der als Absorber fungierenden Diode gemäß

$$T = \frac{q}{k} \cdot \Delta U_D / \ln\left(\frac{I_{D,1}}{I_{D,2}}\right) = \frac{\frac{q}{k} \cdot \Delta U_D}{\ln(I_{D,1}) - \ln(I_{D,2})} \qquad (3)$$

bestimmt werden, wie es im Nachfolgenden noch detailliert erläutert wird. Dabei bedeutet $\Delta U_D$ eine Differenz der Diodenspannungen $U_{D,1}$ und $U_{D,2}$.

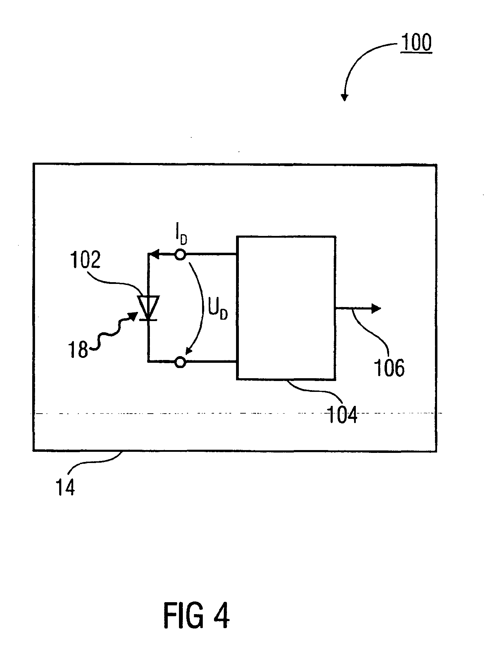

Fig. 4 zeigt eine Draufsicht einer Vorrichtung bzw. eines Bolometers 100 zur Erfassung von elektromagnetischer Strahlung gemäß einem Ausführungsbeispiel der vorliegenden Erfindung.

Die Vorrichtung 100 weist eine Diodenstruktur 102 mit absorbierendem Material zum Absorbieren von elektromagnetischer Strahlung 18 und einer Diode, die aufgrund durch Absorption elektromagnetischer Strahlung induzierter Temperaturänderung ihre Durchlasscharakteristik ändert, auf. Ferner weist die Vorrichtung 100 eine Einrichtung 104 zum Ermitteln eines Messwerts 106 für die absorbierte elektromagnetische Strahlung 18 mittels wenigstens zweier Strom-/Spannungs-Messungen an der Diodenstruktur 102 für unterschiedliche Paare eines Diodenstroms $I_D$ und einer Diodenspannung $U_D$ auf.

Die Diodenstruktur 102 ist gemäß Ausführungsbeispielen auf einem Substrat 14 gebildet und gegen dieses thermisch isoliert. Dabei kann die thermische Isolation beispielsweise zumindest teilweise durch Vakuum erzielt sein, d.h. die Diodenstruktur 102 ist von dem Substrat 14 in einem Abstand d angeordnet. Dies kann beispielsweise dadurch realisiert werden, dass die Diodenstruktur durch Abstandshalter, welche gleichzeitig als Elektroden fungieren können, über dem Substrat 14 aufgehängt ist. Zwischen dem absorbierenden Material der Diodenstruktur 102 und Substrat 14 kann, wie in Fig. 1 angedeutet, ein zusätzliches Isolationsmaterial 16 vorgesehen sein, um eine besondere thermische Isolation zu erreichen.

Die Diodenstruktur 102 kann gemäß Ausführungsbeispielen eine PN-Diode oder eine Schottky-Diode aufweisen. Des Weiteren kann die Diodenstruktur 102 einen organischen Halbleiter aufweisen. Ein entsprechend als Diode geschalteter Bipolartransistor ist ebenfalls denkbar.

Gemäß einem Ausführungsbeispiel ist die Einrichtung 104 zum Ermitteln des Messwerts ausgebildet, um eine Temperatur T der Diodenstruktur 102 aufgrund der Absorption der elektromagnetischen Strahlung 18 zu ermitteln.

Dabei ist die Einrichtung 104 ausgebildet, um der Diode der Diodenstruktur 102 zeitlich aufeinander folgend wenigstens zwei unterschiedliche Diodenströme $I_{D,1}$ und $I_{D,2}$ einzuprägen und daraufhin jeweils die resultierenden Spannungen $U_{D,1}$ und $U_{D,2}$ zu bestimmen.

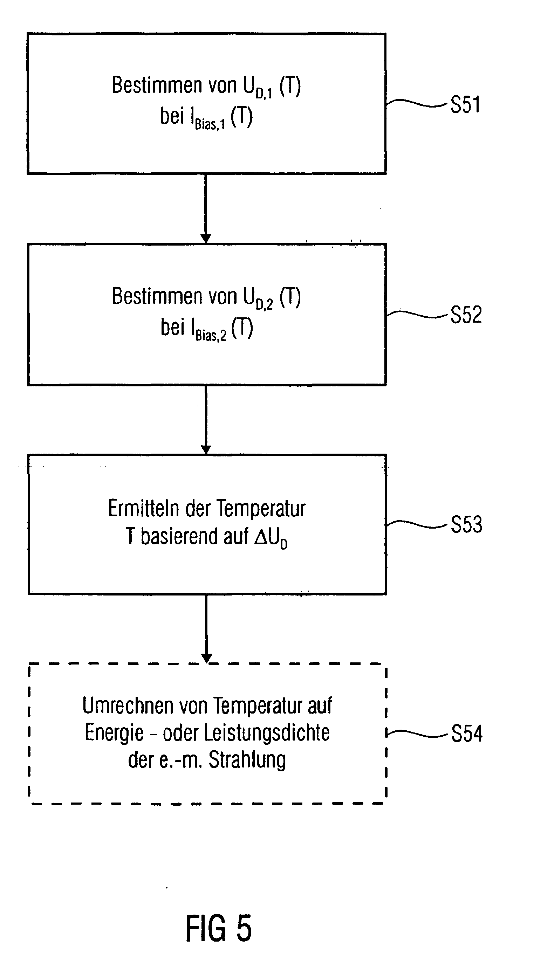

Ein Verfahren gemäß einem Ausführungsbeispiel der vorliegenden Erfindung, bei dem ein eingeprägter Diodenstrom $I_D$ variiert wird und die jeweilige daraus resultierende Diodenspannung $U_D$ gemessen wird, um die Temperatur T zu bestimmen, ist in Fig. 5 dargestellt.

In einem ersten Schritt S51 wird der Diode der Diodenstruktur 102 ein erster Diodenstrom $I_{D,1}$ eingeprägt und eine daraus resultierende erste temperaturabhängige Diodenspannung $U_{D,1}(T)$ gemessen. Die erste gemessene temperaturabhängige Diodenspannung $U_{D,1}(T)$ hängt mit dem eingeprägten ersten Diodenstrom $I_{D,1}$ gemäß

$$U_{D,1}(T) = \frac{kT}{q} \cdot \ln \frac{I_{D,1}}{I_s(T)} \qquad (4)$$

zusammen, wobei $k = 1{,}38 * 10^{-23}$ J/K die Boltzmann-Konstante und q die Elementarladung bedeutet.

In einem zweiten Schritt S52 wird der Diode der Diodenstruktur 102 ein zweiter vorbestimmter Diodenstrom $I_{D,2}$ eingeprägt und daraufhin eine an der Diode 102 abfallende zweite Diodenspannung $U_{D,2}(T)$ gemessen. Entsprechend Gleichung (4) ergibt sich der Zusammenhang zwischen der zweiten Diodenspannung $U_{D,2}(T)$ und dem zweiten eingeprägten Diodenstrom $I_{D,2}$ zu

$$U_{D,2}(T) = \frac{kT}{q} \cdot \ln \frac{I_{D,2}}{I_s(T)} \qquad \cdot \qquad (5)$$

Die Differenz $\Delta U(T)$ der Diodenspannungen $U_{D,1}$ und $U_{D,2}$ aus den beiden Messungen ist proportional zur absoluten Temperatur T der Diode aufgrund der absorbierten elektromagnetischen Strahlung und kann mittels Gleichungen (4) und (5) dargestellt werden als

$$\Delta U_D(T) = \frac{kT}{q} \cdot \left[ \ln\frac{I_{D,1}}{I_S(T)} - \ln\frac{I_{D,2}}{I_S(T)} \right] = \frac{kT}{q} \cdot \left[ \ln(I_{D,1}) - \ln(I_{D,2}) \right] \qquad (6)$$

Da es sich bei den Parametern k, q, $I_{D,1}$, $I_{D,2}$ und $\Delta U_D$(T) um Naturkonstanten bzw. bekannte Größen handelt, kann in einem dritten Schritt S53 die Temperatur T gemäß

$$T = \frac{\frac{q}{k} \cdot \Delta U_D}{\ln(I_{D,1}) - \ln(I_{D,2})} \qquad (7)$$

berechnet werden. In einem weiteren optionalen Schritt S54 kann aus der so ermittelten Temperatur T gegebenenfalls noch eine Energie- bzw. Leistungsdichte der absorbierten elektromagnetischen Strahlung ermittelt werden.

Eine Spannung, die über der Diode der Diodenstruktur 102 abfällt wird also jeweils bei zwei verschiedenen Strömen $I_{D,1}$ und $I_{D,2}$ bestimmt.

Um bei der vorliegenden Erfindung nur eine Diode pro Bolometer nutzen zu können, werden Diodenspannungen nicht gleichzeitig mit zwei Dioden bzw. Diodengruppen bestimmt, sondern zeitlich sequentiell mit nur einer Diodenstruktur 102. Wie im Vorhergehenden bereits beschrieben wurde, kann die Diodenstruktur 102 auch durch einen entsprechend beschalteten Bipolartransistor ersetzt werden.

Der Sperrstrom $I_S$(T) schwankt zwischen verschiedenen Dioden herstellungsbedingt stark und ein genauer Wert ist im Allgemeinen unbekannt. Da bei Ausführungsbeispielen der vorliegenden Erfindung wenigstens zwei Messungen an der gleichen Diode 102 erfolgen, kürzt sich der Sperrstrom $I_S$(T) bei der Berechnung der Temperatur T heraus. Um einen möglichst großen Signalhub zu erreichen, kann es vorteilhaft sein, das Verhältnis zwischen den Strömen $I_{D,1}$ und $I_{D,2}$ möglichst groß zu wählen, beispielsweise größer oder gleich zehn. Die unterschiedlichen Diodenströme $I_{D,1}$ und $I_{D,2}$ können beispielsweise durch eine Pulsweitenmodulation eingestellt werden.

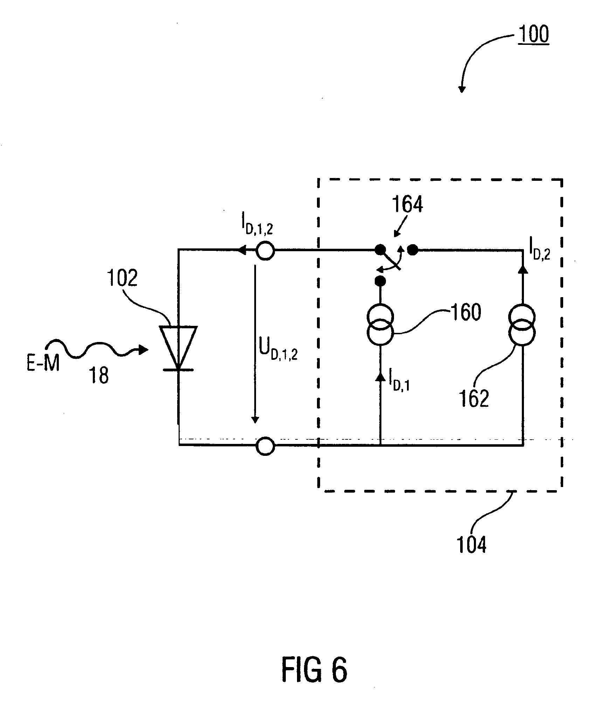

Eine Vorrichtung zur Durchführung des anhand von Fig. 5 beschriebenen Verfahrens ist schematisch in Fig. 6 gezeigt.

Die Einrichtung 104 zum Ermitteln des Messwerts weist gemäß Ausführungsbeispielen zwei Konstantstromquellen 160 und 162 auf, die über einen Schalter 164 ausgewählt werden können. Dabei kann die erste Stromquelle 160 der Diode der Diodenstruktur 102 einen ersten Diodenstrom $I_{D,1}$ einprägen und die zweite Stromquelle 162 kann der Diode der Diodenstruktur 102 bei Auswahl durch den Schalter 164 einen zweiten Diodenstrom $I_{D,2}$ einprägen.

Um die aus den beiden Diodenströmen $I_{D,1}$ und $I_{D,2}$ resultierenden Diodenspannungen $U_{D,1}$ und $U_{D,2}$ bestimmen zu können, weist die Einrichtung 104 ferner eine Spannungsmesseinrichtung (nicht gezeigt) für die Diodenspannung auf. Da für ein Bolometer mit einer Diode und Absorber umfassenden Diodenstruktur Temperaturauflösungen von bis zu 0,1 mK (Milli-Kelvin) erforderlich sein können, kann es vorteilhaft sein, die Diodenspannungen $U_{D,1}$ und $U_{D,2}$ über der Diode 102 sehr genau messen zu können.

Um aus den gemessenen Diodenspannungen $U_{D,1}$ und $U_{D,2}$ und den beiden eingeprägten Konstantströmen $I_{D,1}$ und $I_{D,2}$ die Temperatur T gemäß Gleichung (7) zu bestimmen, weist die Einrichtung 104 gemäß Ausführungsbeispielen ferner eine Verarbeitungseinrichtung, wie z.B. einen Prozessor mit einem entsprechendem Programm, eine dezidiertes Rechenwerk oder ein entsprechend programmiertes FPGA, (nicht gezeigt) zum Ermitteln der Temperatur T auf.

Gemäß weiteren Ausführungsbeispielen ist die Einrichtung 104 zum Ermitteln des Messwerts ausgebildet, um zeitlich aufeinander folgend wenigstens zwei unterschiedliche Spannungen $U_{D,1}$ und $U_{D,2}$ an die Diode der Diodenstruktur 102 anzulegen und daraufhin jeweils die resultierenden temperaturabhängigen Ströme $I_{D,1}$(T) und $I_{D,2}$(T) durch die Diode der Diodenstruktur 102 zu bestimmen.

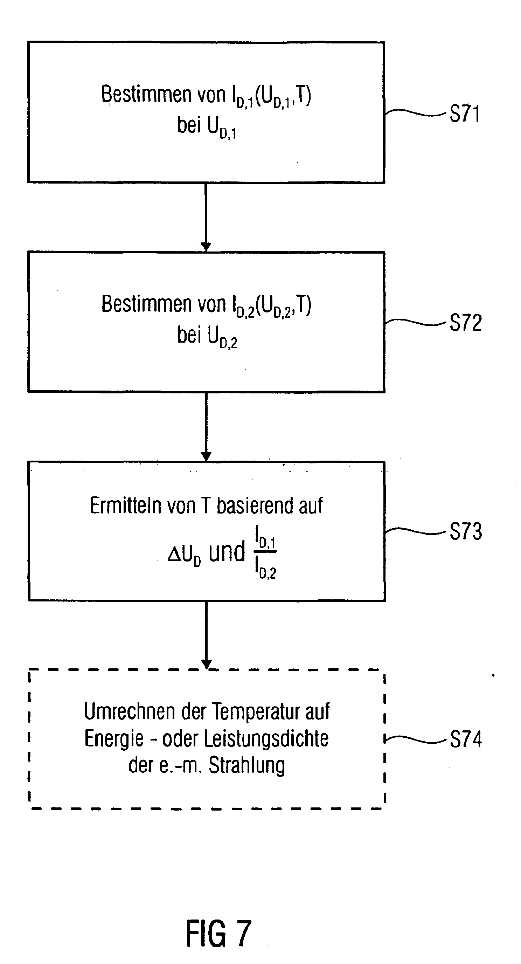

Durch die Umkehrung des anhand von Fig. 5 beschriebenen Messverfahrens kann ein größerer Signalhub erreicht werden. Dazu werden über der Diode der Diodenstruktur 102 verschiedene Spannungen $U_{D,1}$ und $U_{D,2}$ angelegt und jeweils der resultierende Strom $I_{D,1}$(T) und $I_{D,2}$(T) gemessen. Ein entsprechendes Verfahren ist in Fig. 7 anhand eines Flussdiagramms skizziert.

In einem ersten Schritt S71 wird an die Diode der Diodenstruktur 102 eine vordefinierte erste konstante Diodenspannung $U_{D,1}$ angelegt und daraufhin ein erster resultierender temperaturabhängiger Diodenstrom $I_{D,1}(U_{D,1},T)$ gemessen. Die Abhängigkeit zwischen dem ersten Diodenstrom $I_{D,1}$(T) und der ersten vordefinierten angelegten Diodenspannung $U_{D,1}$ ist gegeben als

$$I_{D,1}(U_{D,1},T) = I_s \cdot e^{\frac{q \cdot U_{D,1}}{k \cdot T}} \quad . \tag{8}$$

In einem zweiten Schritt S72 wird eine zweite vordefinierte konstante Diodenspannung $U_{D,2}$ an die Diode der Diodenstruktur 102 angelegt und daraufhin ein zweiter resultierender temperaturabhängiger Diodenstrom $I_{D,2}(U_{D,2},T)$ gemessen. Gemäß Gleichung (8) kann der zweite temperaturabhängige Diodenstrom $I_{D,2}$ geschrieben werden als

$$I_{D,2}(U_{D,2},T) = I_s \cdot e^{\frac{q \cdot U_{D,2}}{k \cdot T}} \quad . \tag{9}$$

Wird nun der Quotient aus den gemessenen Strömen $I_{D,1}(U_{D,1},T)$ und $I_{D,2}(U_{D,2},T)$ gemäß

$$\frac{I_{D,1}(U_{D,1},T)}{I_{D,2}(U_{D,2},T)} = \frac{I_s \cdot e^{\frac{q \cdot U_{D,1}}{k \cdot T}}}{I_s \cdot e^{\frac{q \cdot U_{D,2}}{k \cdot T}}} = e^{\frac{q}{k \cdot T}(U_{D,1} - U_{D,2})} = e^{\frac{q}{k \cdot T}\Delta U_D} \tag{10}$$

gebildet, so erkennt man, dass der Quotient der Ströme $I_{D,1}(U_{D,1},T)$ und $I_{D,2}(U_{D,2},T)$ exponentiell abhängig von der Differenz $\Delta U_D$ der angelegten konstanten Spannungen $U_{D,1}$ und $U_{D,2}$ und dem Kehrwert der Temperatur T ist. Auch bei dieser Ausführungsform kann der Einfluss des Sperrstroms $I_S(T)$ also kompensiert werden, da wieder zwei zeitlich sequentielle Messungen an der gleichen Diode bzw. der gleichen der Diodenstruktur 102 erfolgen. Löst man die vorherige Gleichung nach der Temperatur T auf, so kann in einem dritten Schritt S73 beispielsweise durch die vorerwähnte Verarbeitungseinrichtung die Temperatur gemäß

$$T = \frac{q}{k} \cdot \Delta U_D \, / \ln\left(\frac{I_{D,1}(U_{D,1},T)}{I_{D,2}(U_{D,2},T)}\right) = \frac{\frac{q}{k} \cdot \Delta U_D}{\ln(I_{D,1}(U_{D,1},T)) - \ln(I_{D,2}(U_{D,2},T))} \tag{11}$$

ermittelt werden. Der Absolutwert der Temperatur T kann direkt aus den gemessenen Strömen $I_{D,1}(U_{D,1},T)$ und $I_{D,2}(U_{D,2},T)$ und den angelegten Spannungen $U_{D,1}$ und $U_{D,2}$ bestimmt werden. Da der Quotient der Ströme $I_{D,1}(U_{D,1},T)$ und $I_{D,2}(U_{D,2},T)$ gebildet wird, beeinflussen bei diesem Messverfahren eventuelle Verstärkungsfehler einer Verarbeitungskette und eines nachgeschalteten Analog-Digital-Wandlers das Ergebnis nicht.

Gemäß Ausführungsbeispielen kann anstatt einer direkten Messung der Diodenströme $I_{D,1}(U_{D,1},T)$ und $I_{D,2}(U_{D,2},T)$ auch eine aufakkumulierte Ladung gemessen werden. Der Diodenstrom wird dazu aufintegriert. Durch den Integrationsvorgang wird eine obere Eckfrequenz einer das Verfahren realisierenden Schaltung zu kleineren Frequenzen hin verschoben. Dadurch kann eine Rauschbandbreite und damit das Rauschen sinken. Die Integration des Diodenstroms $I_{D,1}$ bzw. $I_{D,2}$ kann abhängig vom Signal gesteuert werden. Bei Erreichen einer vordefinierten Sättigung kann z. B. die Integration abgebrochen werden. Damit können Anforderungen an einen eventuell nachgeschalteten Analog-Digital-Wandler gesenkt werden.

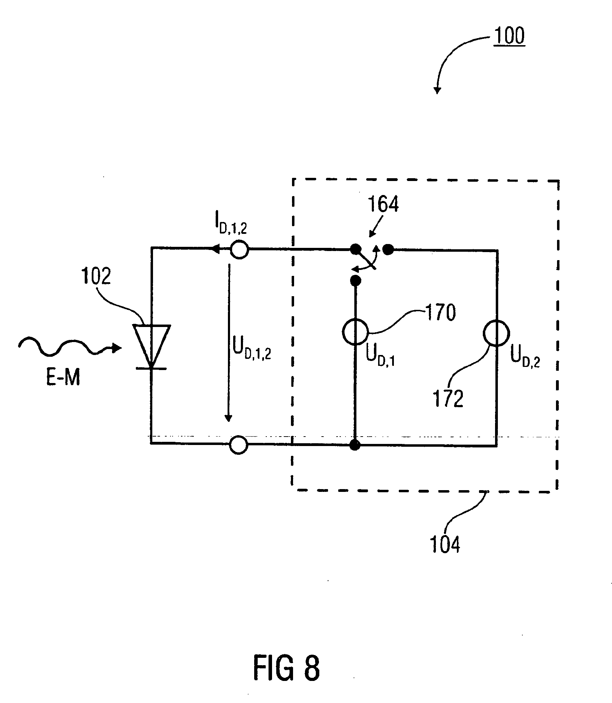

Ein Bolometer bzw. eine Vorrichtung 100 zur Erfassung von elektromagnetischer Strahlung gemäß dem in Fig. 7 dargestellten Verfahren ist in Fig. 8 gezeigt.

Die Einrichtung 104 zum Ermitteln des Messwerts weist gemäß Ausführungsbeispielen zwei Spannungsquellen 170 und 172 auf, die über einen Schalter 164 ausgewählt werden können. Dabei kann mit der ersten Spannungsquelle 170 die erste Spannung $U_{D,1}$ an die Diode 102 angelegt werden und mit der zweiten Spannungsquelle 172 die zweite Spannung $U_{D,2}$ an die Diode der Diodenstruktur 102 angelegt werden.

Um die aus den beiden Spannungen $U_{D,1}$ und $U_{D,2}$ resultierenden Diodenströme $I_{D,1}(U_{D,1},T)$ und $I_{D,2}(U_{D,2},T)$ bestimmen zu können weist die Einrichtung 104 eine Strommesseinrichtung (nicht gezeigt) für den Diodenstrom auf. Um aus den gemessenen Diodenströmen $I_{D,1}(U_{D,1},T)$ und $I_{D,2}(U_{D,2},T)$ und den beiden Konstantspannungen $U_{D,1}$ und $U_{D,2}$ die Temperatur T gemäß Gleichung (11) zu bestimmen, weist die Einrichtung 104 gemäß Ausführungsbeispielen ferner eine Verarbeitungseinrichtung, wie z.B. einen Prozessor, (nicht gezeigt) zum Ermitteln der Temperatur T auf.

Während der im Vorhergehenden beschriebenen Messverfahren heizt sich ein Bolometer gemäß Ausführungsbeispielen bzw. die Diode der Diodenstruktur 102 durch die Ströme $I_{D,1}$ und $I_{D,2}$ auf. Daher ändert sich die absolute Temperatur zwischen jeweils aufeinander folgenden Messungen. Eine konstante Temperatur T zwischen zeitlich aufeinander folgenden Messungen kann in der Regel nicht eingehalten werden. Diese Temperaturänderung kann beispielsweise durch einen Korrekturfaktor berücksichtigt werden, oder durch eine Mehrfachmessung kompensiert werden. Im Fall des Korrekturfaktors könnte beispielsweise ein Schätzwert für eine Temperaturänderung $\Delta T$ zwischen zwei aufeinander folgenden Messungen bzw. ein Schätzwert für $\Delta T/T$ herangezogen werden.

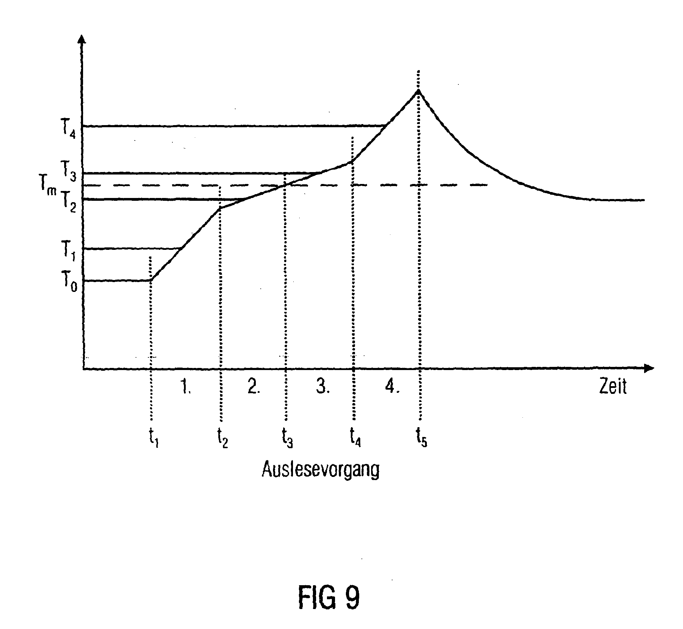

Durch drei oder mehr Messungen kann die beschriebene Temperaturänderung $\Delta T$ aufgrund der Aufheizung durch den Messstrom kompensiert werden. Dazu zeigt Fig. 9 schematisch einen Temperaturverlauf der Diode 102 über der Zeit bei vier aufeinander folgenden Messungen.

In einem ersten Zeitraum zwischen den Zeitpunkten $t_1$ und $t_2$ wird bei einer an die Diode der Diodenstruktur 102 angelegten ersten Spannung $U_{D,1}$ ein resultierender Diodenstrom $I_{D,11}(U_{D,1},T_1)$ durch die Diode der Diodenstruktur 102 gemessen. Anschließend, d. h. in den Zeiträumen $t_2$ bis $t_3$ und $t_3$ bis $t_4$ folgen eine zweite und dritte Messung mit einer angelegten zweiten Spannung $U_{D,2}$. Schließlich folgt im vierten Zeitraum $t_4$ bis $t_5$ eine weitere Messung eines Diodenstroms $I_{D,14}(U_{D,1},T_4)$ mit der konstanten ersten Spannung $U_{D,1}$.

Die Ergebnisse, d.h. die gemessenen Diodenströme, die jeweils mit der gleichen angelegten Spannung ermittelt wurden, können nun gemittelt werden. In dem in Fig. 9 gezeigten Beispiel bedeutet dies, dass der im ersten Zeitraum gemessene Diodenstrom $I_{D,11}$ und der im vierten Zeitraum gemessene Diodenstrom $I_{D,14}$ zu einem Diodenstrom $I_{D,1}(U_{D,1},T_m) = (I_{D,11}(U_{D,1},T_1) + I_{D,14}(U_{D,1},T_4))/2$ gemittelt werden. Entsprechendes gilt für die im zweiten und dritten Zeitraum bei angelegter Diodenspannung $U_{D,2}$ gemessenen Diodenströme $I_{D,22}$ und $I_{D,23}$, d.h. $I_{D,2}(U_{D,2},T_m) = (I_{D,22}(U_{D,2},T_2) + I_{D,23}(U_{D,2},T_3))/2$. Bei einem annähernd linearen Verhalten im Arbeitspunkt entsprechen die gemittelten Diodenströme Messungen bei einer mittleren Temperatur $T_m$ während des gesamten Auslesevorgangs. Insbesondere ergibt sich die mittlere Temperatur $T_m$ zu $T_m = (T_1 + T_4)/2 = (T_2 + T_3)/2 = (T_1 + T_2 + T_3 + T_4)/4$. Sie weicht von der Anfangstemperatur $T_0$ aufgrund der Eigenerwärmung an der Diodenstruktur 102 prozentual zwar geringfügig ab, aber durch die Mittelung ergeben sich wenigstens Werte, wie sie sich bei Messungen ergäben, die alle bei einer gemeinsamen Temperatur $T_m$ durchgeführt wurden.

Bei dem in Fig. 9 dargestellten Beispiel ist die erste angelegte Spannung $U_{D,1}$ größer als die zweite angelegte Spannung $U_{D,2}$. Durch die höhere Verlustleistung steigt die Temperatur während der ersten und der vierten Messung schneller an. Nach dem Messen nimmt die Temperatur ab dem Zeitpunkt $t_5$ wieder ab, da keine elektrische Leistung mehr auftritt.

Gemäß Ausführungsbeispielen kann statt den beiden Messungen 2 und 3 in Fig. 9 auch nur eine Messung mit der zweiten Spannung $U_{D,2}$ erfolgen, so dass insgesamt drei Messungen durchgeführt werden. Hier werden dann entsprechend die Diodenströme der Messungen 1 und 3 mit der ersten Spannung $U_{D,11}$ wie im Vorhergehenden beschrieben, gemittelt.

Das soeben Ausgeführte ist natürlich in gleicher Weise für das in Fig. 5 skizzierte Verfahren anwendbar, d.h. dem Einprägen von Konstantströmen $I_{D,1}$ und $I_{D,2}$ und darauf folgendes Messen der jeweils resultierenden Diodenspannungen.

Ferner wird darauf hingewiesen, dass obiges Ausführungsbeispiel ohne weiteres auch auf mehr als vier Messungen erweiterbar ist, wobei stets die Ströme bei den Spannungen $D_{D,1}$ und $D_{D,2}$ ermittelt werden.

Die Temperatur T der Diode 102 bzw. des Absorbers eines Bolometers wird im Allgemeinen durch die Temperatur des Substrates 14 beeinflusst. In einem realen Bolometer ist die Temperaturschwankung durch eine Änderung der Substrattemperatur sehr viel größer als durch die einfallende elektromagnetische Strahlung. Dieser Effekt und auch die Eigenerwärmung eines Bolometers kann durch ein so genanntes blindes Bolometer kompensiert werden. Dabei kann ein blindes Bolometer ein Bolometer sein, welches der elektromagnetischen Strahlung 18 nicht ausgesetzt ist, da es beispielsweise durch eine Platte, ein Reflektor, wie z.B. an der Oberfläche der Diodenstruktur, oder dergleichen abgeschirmt ist. Ferner kann ein blindes Bolometer aber dadurch erhalten werden, dass für dieses in der Diodenstruktur kein absorbierendes Material vorgesehen wird, so dass es gegen die interessierende Strahlung, wie z.B. Wärme- oder Infrarotstrahlung, unempfindlich ist. Nur eine Differenztemperatur zwischen einem aktiven für elektromagnetische Strahlung empfindlichen Bolometer und einem blinden für elektromagnetische Strahlung unempfindlichen Bolometer wird durch die auf das aktive Bolometer einfallende elektromagnetische Strahlung verursacht. Diese Differenztemperatur stellt dabei das Nutzsignal bzw. den Messwert dar.

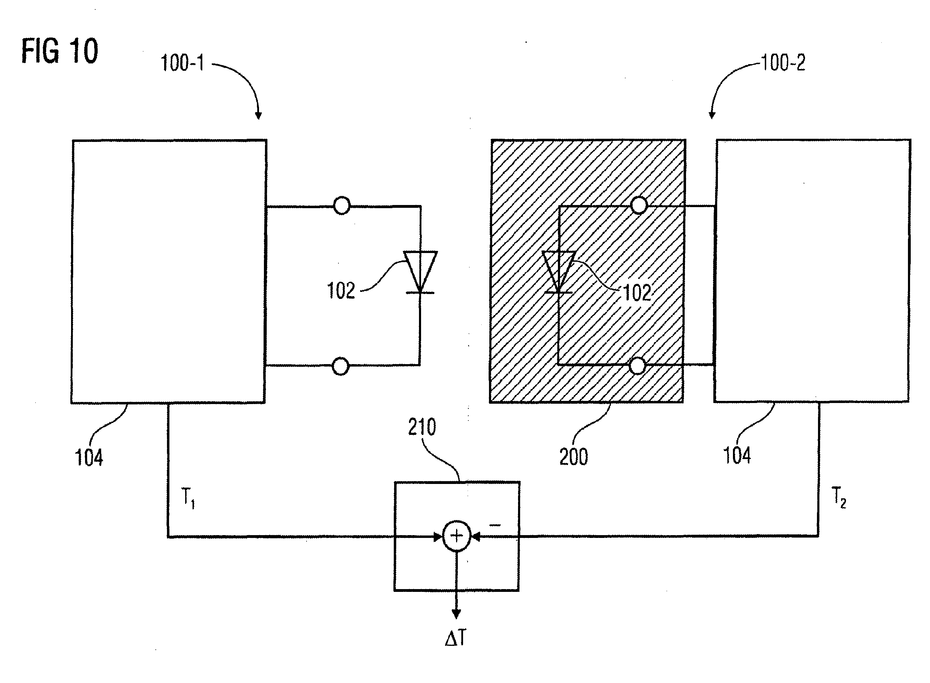

Fig. 10 zeigt schematisch einen Zusammenschaltung eines aktiven Bolometers 100-1 und eines blinden Bolometers 100-2 gemäß einem Ausführungsbeispiel.

Sowohl das aktive Bolometer 100-1 als auch das durch eine Platte 200 von der elektromagnetischen Strahlung abgeschirmte blinde Bolometer 100-2 weisen jeweils eine Diode 102 und eine Einrichtung 104 zum Ermitteln jeweils einer Temperatur $T_1$ und $T_2$ auf. Die ermittelten Temperaturen werden mittels eines Subtrahierers 210 voneinander abgezogen, so dass eine Differenztemperatur $\Delta T$ erhalten wird. Diese Differenztemperatur $\Delta T$ ist proportional zu der von dem aktiven Bolometer 100-1 detektierten elektromagnetischen Strahlung.

Bei dem in Fig. 2 gezeigten Bolometerarray könnte jeweils in unmittelbarer Nähe eines aktiven Bolometers ein blindes Bolometer vorgesehen sein, welches im Gegensatz zu dem jeweils aktiven Bolometer vor der elektromagnetischen Strahlung abgeschirmt ist, so wie es anhand von Fig. 10 beschrieben wurde. Die Temperaturmessung bei einem blinden Bolometer läuft dabei nach dem gleichen Prinzip ab, wie es im Vorhergehenden bereits dargestellt wurde. Da sich sowohl das blinde Bolometer als auch das aktive Bolometer jeweils durch den Stromfluss durch die Dioden erwärmen, fällt diese Eigenerwärmung aus der Temperaturdifferenz zwischen blindem und aktivem Bolometer heraus. Die Substrattemperatur fällt bei der Temperaturdifferenzbildung zwischen aktivem und blindem Bolometer ebenfalls heraus. Dabei muss aber nicht jedem Bolometer ein blindes Bolometer zugeordnet sein. Vielmehr kann eine geringere Anzahl an blinden Bolometern vorgesehen sein. Ihre Ergebnisse werden beispielsweise zwischengespeichert.

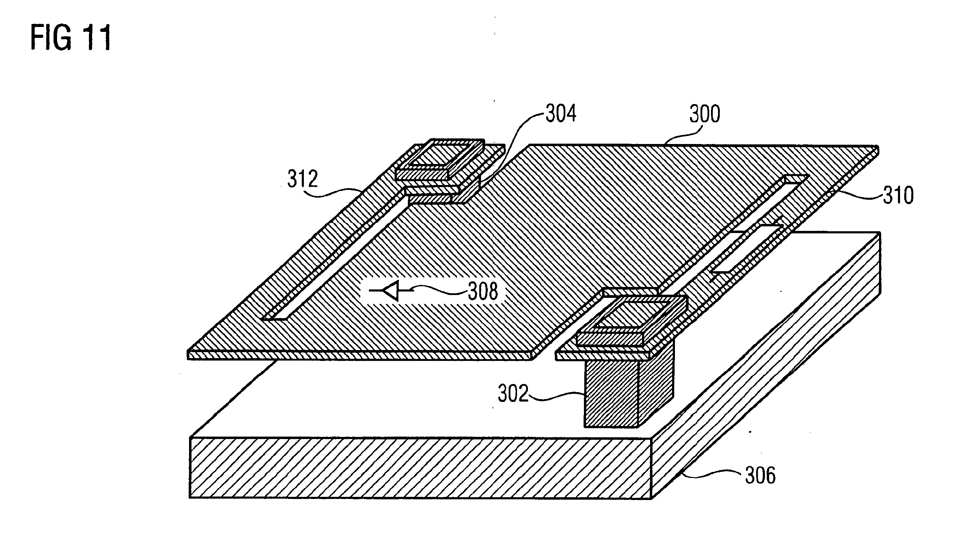

Fig. 11 zeigt ein Ausführungsbeispiel einer an einem Substrat befestigten Diodenstruktur, die als einzelnes Sensorelement aber auch als ein Sensorelement bzw. Pixel in einem Pixelarray dienen könnte, wie z.B. mit 640x480 Pixeln. Sie umfasst eine Thermometermembran 300, die an zweier ihrer Ecken zwischen zwei Abstandshaltern 302 und 304 aufgespannt ist, um von dem Substrat 306 beabstandet zu sein. Unterhalb der Membran auf dem Substrat 306 kann sich eine Reflektorschicht (nicht gezeigt) befinden, wobei der Abstand zwischen Membran 300 und Substrat 306 auf $\lambda/4$ bzw. ein Viertel der Wellenlänge $\lambda$ der interessierenden Strahlung eingestellt sein kann, wie z.B. auf ungefähr 2,5 $\mu$m, wobei vorliegende Ausführungsbeispiele aber auch für Wellenlängen von ungleich 10$\mu$m verwendbar sind. Die Abstandshalter 302 und 304 fixieren nicht nur die Membran 810 über dem Substrat 306, sondern fungieren auch als Anschlusspfosten, die an gegenüberliegenden Enden der Membran 300 einen elektrischen Kontakt zwischen dem jeweiligen Ende der Membran 300 und dem Substrat 306 oder darauf gebildeten Metall-Anschlussflächen, einer darin integrierten Schaltung (nicht gezeigt) oder in bzw. auf dem Substrat 306 gebildeten Leiterbahnen (nicht gezeigt) herstellen, so dass eine in der Membran 300 gebildete, in Fig. 11 skizzenhaft angedeutete thermische Diode 308 mit einer der im vorhergehenden erwähnten Ermittlungseinrichtungen verbindbar ist. Die Ermittlungseinrichtung kann als eine in dem Substrat 306 integrierte Schaltung (nicht gezeigt) ausgeführt sein, wie z.B. als Teil einer integrierten Ausleseschaltung ROIC (ROIC = readout integrated circuit).

Um eine möglichst hohe thermische Sensibilität zu erreichen, kann die Membran 300 wie in Fig. 11 exemplarisch gezeigt an den aufgehängten Enden so geformt sein, dass sie über schmale Abschnitte 310 und 312 mit den Abstandshaltern 302 und 304 verbunden ist, so dass eine thermische Isolation der Membran 300 810 erzielt werden kann.

Zur thermischen Isolierung kann sich ferner die Diodenstruktur von Fig. 11 in einem mit Vakuum gefüllten Gehäuse befinden, obwohl dies in Fig. 11 der Übersichtlichkeit halber nicht gezeigt ist. Das Vakuum vermeidet Wärmetransport durch Konvektion.

Die Thermometermembran 300 bildet die vorerwähnte Diodenstruktur. Die Membran 300 kann aus mehreren Schichten bestehen. Ein Paar oder mehrere dieser Schichten können eine vertikale Diode bilden. Die Membran 300 kann allerdings auch derart hergestellt sein, dass sie eine laterale Diode aufweist, wie z.B. einen lateralen quer über die Membran 300 verlaufenden PN-Übergang in einer Schicht der Membran 300. Eine oder mehrere dieser Schichten oder eine oder mehrere zusätzliche andere Schicht kann/können für die interessierende elektromagnetische Strahlung absorbierend wirken und damit als der vor erwähnte Absorber fungieren. Aufgrund der elektromagnetischen Strahlung erwärmt sich das absorbierende Material und damit auch die in der Membran 300 gebildete Diode 308, die hierdurch wiederum ihre Strom/Spannungs-Charakteristik ändert, wie es im Vorhergehenden erwähnt wurde. Die vorerwähnte Ermittlungseinrichtung ermittelt dann aus dieser Charakteristikänderung wie im Vorhergehenden erwähnt mittels mehrerer Messungen ein Maß für die eingefallene Strahlungsmenge.

Somit zeigt die Fig. 11 eine Möglichkeit für die Wandlung elektromagnetischer Strahlung mit Wellenlängen von beispielsweise 8 $\mu$m bis 14 $\mu$m mittels eines ungekühlten Bolometers, das auch Teil eines ungekühlten zweidimensionalen Mikro-Bolometer-Arrays sein kann, und das zudem direkt mit einer CMOS-Ausleseschaltung auf einem Chip integriert sein kann.

Aus Fig. 11 ist ferner ersichtlich, dass in der Diodenstruktur die Diode als Detektor für die Temperatur der Diodenstruktur beziehungsweise des Bolometers dient. Die Membran 300 des Bolometers kann dabei, wie erwähnt, aus verschiedenen Schichten gebildet sein, wobei eine oder mehrere der Schichten als Absorber fungieren kann. Eine oder mehrere weitere Schicht(en) kann/können aus einem Halbleiter bestehen, in dem sich die Diode befindet. Die Diode nimmt nicht unbedingt die ganze Pixelfläche ein, sondern sie kann sich auch nur über einen kleinen Teil der Membran erstrecken. Bei geeigneter Ausführung des Halbleitermaterials beispielsweise kann die Diodenschicht auch die Rolle des Absorbers mit übernehmen. Insbesondere sind mögliche Halbleitermaterialien Silizium, Galliumarsenid oder dergleichen. Wie im Vorhergehenden erwähnt, können aber auch organische Halbleitermaterialien verwendet werden.

Ausführungsbeispiele der vorliegenden Erfindung ermöglichen ein Auslesen eines Bolometers ohne eine vorherige Kalibrierung von Offset und Verstärkung des Sensors bzw. Absorbers. Eine Messung des Offsets während des Betriebs ist ebenfalls nicht notwendig. Dadurch können Kosten für die Kalibrierung, Speicher für die Kalibrierungsdaten und der eingangs angesprochene Shutter gespart werden. Da mit Ausführungsbeispielen der vorliegenden Erfindung kein Offset-Abgleich während des Betriebs mehr notwendig ist, wird eine Bilderfassung mittels eines Bolometer-Arrays bzw. einer Bolometer-Matrix nicht unterbrochen. Im Gegensatz zu Wärmebildkameras mit Shutter kann eine Szene kontinuierlich ohne Unterbrechungen beobachtet werden. Es gibt keinen Zeitraum, in dem keine Bildaufnahme erfolgt. Außerdem ist es mit Ausführungsbeispielen der vorliegenden Erfindung möglich, die absolute Temperatur T des Sensors bzw. der Diode zu bestimmen. Bisher musste bei der Messung des Offsets die Temperatur des Shutters berücksichtigt werden, da auch von diesem Wärmestrahlung ausgeht.

Zusammenfassend soll darauf hingewiesen werden, dass die vorliegende Erfindung nicht auf die jeweiligen Bauteile der Vorrichtung oder die erläuterte Vorgehensweise beschränkt ist, da diese Bauteile im Verfahren variieren können. Die hier verwendeten Begriffe sind lediglich dafür bestimmt, besondere Ausführungsbeispiele zu beschreiben und nicht einschränkend verwendet. Wenn in der Beschreibung und in den Ansprüchen die Einzahl oder unbestimmte Artikel verwendet werden, beziehen sich diese auch auf die Mehrzahl dieser Elemente, solange nicht der Gesamtzusammenhang eindeutig etwas anderes deutlich macht. Dasselbe gilt in umgekehrter Richtung.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem und/oder Mikrocontroller zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner und/oder Mikrocontroller abläuft. In anderen Worten ausgedrückt kann die Erfindung somit als ein Computerprogramm mit einem Programmcode zur Durchführung des Verfahrens realisiert werden, wenn das Computerprogramm auf einem Computer und/oder Mikrocontroller abläuft.

## Patentansprüche

1. Vorrichtung (100) zur Erfassung von elektromagnetischer Strahlung (18), mit
   einer Diodenstruktur (102), die für elektromagnetische Strahlung (18) absorbierend wirkt und eine Diode aufweist; und
   einer Einrichtung (104) zum Ermitteln eines Messwerts (106; T) für die absorbierte elektromagnetische Strahlung (18) mittels wenigstens zweier Strom-/SpannungsMessungen an der Diode (102) für unterschiedliche Paare eines Diodenstroms ($I_{D,1}$; $I_{D,2}$) und einer Diodenspannung ($U_{D,1}$; $U_{D,2}$), wobei der Messwert mit Hilfe der Temperaturabhängigkeit zwischen Diodenspannung und Diodenstrom bestimmt wird.

2. Vorrichtung gemäß Anspruch 1, wobei die Diodenstruktur (102) auf einem Substrat (14) gebildet ist und gegen dieses thermisch isoliert ist.

3. Vorrichtung gemäß Anspruch 1 oder 2, wobei die Diode (102) als PN-Diode ausgebildet ist.

4. Vorrichtung gemäß Anspruch 1 oder 2, wobei die Diode (102) als Schottky-Diode ausgebildet ist.

5. Vorrichtung gemäß Anspruch 1 oder 2, wobei die Diode (102) durch organische Halbleiter ausgebildet ist.

6. Vorrichtung gemäß Anspruch 1 oder 2, wobei die Diode (102) ein als Diode beschalteter Bipolartransistor ist.

7. Vorrichtung gemäß einem der vorhergehenden Ansprüche, wobei die Einrichtung (104) zum Ermitteln des Messwerts ausgebildet ist, um zeitlich aufeinander folgend wenigstens zwei unterschiedliche Spannungen ($U_{D,1}$; $U_{D,2}$) an die Diode (102) anzulegen und daraufhin jeweils die resultierenden Ströme ($I_{D,1}$; $I_{D,2}$) durch die Diode (102) zur Ermittlung des Messwerts zu verwenden.

8. Vorrichtung gemäß einem der Ansprüche 1 bis 6, wobei die Einrichtung (104) zum Ermitteln des Messwerts ausgebildet ist, um zeitlich aufeinander folgend wenigstens zwei unterschiedliche Ströme ($I_{D1}$; $I_{D2}$) an die Diode (102) anzulegen und daraufhin die jeweils resultierenden Spannungen ($U_{D1}$; $U_{D2}$) an der Diode (102) zur Ermittlung des Messwerts zu verwenden.

9. Vorrichtung gemäß Anspruch 7 oder 8, wobei die Einrichtung zum Ermitteln des Messwerts ausgebildet ist, um basierend auf den wenigstens zwei verschiedenen Strömen ($I_{D1}$; $I_{D2}$) und den wenigstens zwei verschiedenen Spannungen ($U_{D1}$; $U_{D2}$) eine Temperatur (T) der Diode zu (102) bestimmen.

**10.** Vorrichtung gemäß Anspruch 9, wobei die Einrichtung zum Ermitteln des Messwerts ausgebildet ist, die Temperatur gemäß

$$T = \frac{\frac{q}{k} \cdot \Delta U_D}{\ln(I_{D,1}) - \ln(I_{D,2})}$$

zu bestimmen, wobei q die Elementarladung, k die Boltzmannkonstante und $\Delta U_D$ eine Differenz der wenigstens zwei verschiedenen Spannungen ($U_{D1}$; $U_{D2}$) bedeutet.

**11.** Vorrichtung gemäß einem der vorhergehenden Ansprüche, wobei die Einrichtung (104) zum Ermitteln des Messwerts ausgebildet ist, um eine durch einen Stromfluss durch die Diode (102) hervorgerufene Eigenerwärmung zu kompensieren.

**12.** Vorrichtung gemäß Anspruch 11, wobei die Einrichtung (104) zum Ermitteln des Messwerts ausgebildet ist, um die Eigenerwärmung der Diode mittels eines Korrekturfaktors zu kompensieren.

**13.** Vorrichtung gemäß Anspruch 11, wobei die Einrichtung (104) zum Ermitteln des Messwerts ausgebildet ist, die Eigenerwärmung der Diode (102) zu kompensieren, indem durch Mehrfachmessungen eines Diodenstroms ($I_{D,1}$; $I_{D,2}$) bei unterschiedlichen Temperaturen und jeweils gleicher Spannung ($U_{D,1}$; $U_{D,2}$) ein mittlerer Diodenstrom bei einer mittleren Temperatur ($T_m$) bestimmt wird.

**14.** Vorrichtung gemäß Anspruch 11, wobei die Einrichtung (104) zum Ermitteln des Messwerts ausgebildet ist, die Eigenerwärmung der Diode (102) zu kompensieren, indem durch Mehrfachmessungen der Diodenspannung ($U_{D,1}$; $U_{D,2}$) bei unterschiedlichen Temperaturen und jeweils gleichem Strom ($I_{D,1}$; $I_{D,2}$) eine mittlere Diodenspannung bei einer mittleren Temperatur ($T_m$) bestimmt wird.

**15.** Vorrichtung gemäß einem der vorhergehenden Ansprüche, mit einer zweiten Diodenstruktur, die eine zweite Diode aufweist aber gegenüber der elektromagnetischen Strahlung abgeschirmt oder unempfindlich ist, und einer Einrichtung zum Ermitteln einer Temperatur für die zweite Diode mittels wenigstens zweier Strom-/Spannungs-Messungen an der zweiten Diode für unterschiedliche Paare eines Diodenstroms ($I_{D,1}$; $I_{D,2}$) und einer Diodenspannung ($U_{D,1}$; $U_{D,2}$).

**16.** Vorrichtung gemäß Anspruch 15, wobei die Vorrichtung mehr absorbierend wirkende Diodenstrukturen als abgeschirmte oder unempfindliche zweite Diodenstrukturen aufweist.

**17.** Verfahren zur Erfassung von elektromagnetischer Strahlung (18), mit folgenden Schritten:

Absorbieren der elektromagnetischen Strahlung (18) mit einer Diodenstruktur (102), die für elektromagnetische Strahlung (18) absorbierend wirkt und eine Diode aufweist; und
Ermitteln eines Messwerts für die absorbierte elektromagnetische Strahlung (18) mittels wenigstens zweier Strom-/Spannungsmessungen an der Diode (102) für unterschiedliche Paare eines Diodenstroms ($I_{D,1}$; $I_{D,2}$) und einer Diodenspannung ($U_{D,1}$; $U_{D,2}$), wobei der Messwert mit Hilfe der Temperaturabhängigkeit zwischen Diodenspannung und Diodenstrom bestimmt wird.

**18.** Computer-Programm mit einem Programmcode zur Durchführung des Verfahrens gemäß Anspruch 17, wenn das Computer-Programm auf einem Computer und/oder Mikrocontroller abläuft.

**Claims**

**1.** Device (100) for detecting electromagnetic radiation (18), comprising:

a diode structure (102) acting absorbingly for electromagnetic radiation (18) and comprising a diode; and
a means (104) for ascertaining a measurement value (106; T) for the absorbed electromagnetic radiation (18) by means of at least two current/voltage measurements at the diode (102) for different pairs of a diode current $(I_{D,1}; I_{D,2})$ and a diode voltage $(U_{D,1}; U_{D,2})$, wherein the measurement value is determined with the help of the temperature dependence between diode voltage and diode current.

2. Device according to claim 1, wherein the diode structure (102) is formed on a substrate (14) and thermally isolated therefrom.

3. Device according to claim 1 or 2, wherein the diode (102) is formed as a pn diode.

4. Device according to claim 1 or 2, wherein the diode (102) is formed as a Schottky diode.

5. Device according to claim 1 or 2, wherein the diode (102) is formed by organic semiconductors.

6. Device according to claim 1 or 2, wherein the diode (102) is a bipolar transistor connected as a diode.

7. Device according to one of the preceding claims, wherein the means (104) for ascertaining the measurement value is formed to temporally successively apply at least two different voltages $(U_{D,1}; U_{D,2})$ to the diode (102) and, thereupon, to respectively use the resulting currents $(I_{D,1}; I_{D,2})$ through the diode (102) for ascertaining the measurement value.

8. Device according to one of claims 1 to 6, wherein the means (104) for ascertaining the measurement value is formed to temporally successively apply at least two different currents $(I_{D,1}; I_{D,2})$ to the diode (102) and, thereupon, to use the respectively resulting voltages $(U_{D,1}, U_{D,2})$ at the diode (102) for ascertaining the measurement value.

9. Device according to claim 7 or 8, wherein the means for ascertaining the measurement value is formed to determine a temperature (T) of the diode (102), based on the at least two different currents $(I_{D,1}; I_{D,2})$ and the at least two different voltages $(U_{D,1}; U_{D,2})$.

10. Device according to claim 9, wherein the means for ascertaining the measurement value is formed to determine the temperature according to

$$T = \frac{\frac{q}{k} \cdot \Delta U_D}{\ln(I_{D,1}) - \ln(I_{D,2})}$$

wherein q denotes the elementary charge, k denotes the Boltzmann constant and $\Delta U_D$ denotes a difference of the at least two different voltages $(U_{D,1}; U_{D,2})$.

11. Device according to any of the preceding claims, wherein the means (104) for ascertaining the measurement value is formed to compensate a self-heating caused by a current flow through the diode (102).

12. Device according to claim 11, wherein the means (104) for ascertaining the measurement value is formed to compensate the self-heating of the diode by means of a correction factor.

13. Device according to claim 11, wherein the means (104) for ascertaining the measurement value is formed to compensate the self-heating of the diode (102), by a determination of a mean diode current at a mean temperature $(T_m)$ by multiple measurements of a diode current $(I_{D,1}; I_{D,2})$ at different temperatures and respectively the same voltage $(U_{D,1}; U_{D,2})$.

14. Device according to claim 11, wherein the means (104) for ascertaining the measurement value is formed to compensate the self-heating of the diode (102), by a determination of a mean diode voltage at a mean temperature $(T_m)$ by multiple measurements of the diode voltage $(U_{D,1}; U_{D,2})$ at different temperatures and respectively the same current $(I_{D,1}; I_{D,2})$.

15. Device according to any of the preceding claims, with a second diode structure comprising a second diode but shielded from or insensitive to the electromagnetic radiation, and a means for ascertaining a temperature for the second diode by means of at least two current/voltage measurements at the second diode for different pairs of a diode current ($I_{D,1}$; $I_{D,2}$) and a diode voltage ($U_{D,1}$; $U_{D,2}$).

16. Device according to claim 15, wherein the device comprises more absorbingly acting diode structures than shielded or insensitive second diode structures.

17. Method for detecting electromagnetic radiation (18), comprising:

   absorbing the electromagnetic radiation (18) with a diode structure (102) acting absorbingly for the electromagnetic radiation (18) and comprising a diode; and
   ascertaining a measurement value for the absorbed electromagnetic radiation (18) by means of at least two current/voltage measurements at the diode (102) for different pairs of a diode current ($I_{D,1}$; $I_{D,2}$) and a diode voltage ($U_{D,1}$; $U_{D,2}$), wherein the measurement value is determined with the help of the temperature dependence between diode voltage and diode current.

18. Computer program with a program code for performing the method according to claim 17, when the computer program runs on a computer and/or a microcontroller.


**Revendications**

1. Dispositif (100) pour détecter un rayonnement électromagnétique (18), avec
   une structure de diode (102) agissant de manière à absorber un rayonnement électromagnétique (18) et présentant une diode; et
   un moyen (104) destiné à déterminer une valeur de mesure (106; T) du rayonnement électromagnétique absorbé (18) au moyen d'au moins deux mesures de courant/tension à la diode (102) pour différentes paires d'un courant de diode ($I_{D,1}$; $I_{D,2}$) et d'une tension de diode ($U_{D,1}$; $U_{D,2}$), la valeur de mesure étant déterminée à l'aide de la dépendance de température entre la tension de diode et le courant de diode.

2. Dispositif selon la revendication 1, dans lequel la structure de diode (102) est formée sur un substrat (14) et est isolée thermiquement de ce dernier.

3. Dispositif selon la revendication 1 ou 2, dans lequel la diode (102) est réalisée sous forme de diode PN.

4. Dispositif selon la revendication 1 ou 2, dans lequel la diode (102) est réalisée sous forme de diode de Schottky.

5. Dispositif selon la revendication 1 ou 2, dans lequel la diode (102) est réalisée par des semi-conducteurs organiques.

6. Dispositif selon la revendication 1 ou 2, dans lequel la diode (102) est un transistor bipolaire câblé comme diode.

7. Dispositif selon l'une des revendications précédentes, dans lequel le moyen (104) destiné à déterminer une valeur de mesure est réalisé pour appliquer à la diode (102) au moins deux tensions différentes ($U_{D,1}$; $U_{D,2}$) successives dans le temps et pour utiliser ensuite chaque fois les courants résultants ($I_{D,1}$; $I_{D,2}$) passant par la diode (102) pour déterminer la valeur de mesure.

8. Dispositif selon l'une des revendications 1 à 6, dans lequel le moyen (104) destiné à déterminer la valeur de mesure est réalisé pour appliquer à la diode (102) au moins deux courants différents ($I_{D,1}$; $I_{D,2}$) successifs dans le temps et pour utiliser ensuite chaque fois les tensions résultantes ($U_{D,1}$; $U_{D,2}$) à la diode (102) pour déterminer la valeur de mesure.

9. Dispositif selon la revendication 7 ou 8, dans lequel le moyen destiné à déterminer la valeur de mesure est réalisé pour déterminer, sur base des au moins deux courants différents ($I_{D,1}$; $I_{D,2}$) et des au moins deux tensions différentes ($U_{D,1}$; $U_{D,2}$), une température (T) de la diode (102).

10. Dispositif selon la revendication 9, dans lequel le moyen destiné à déterminer la valeur de mesure est réalisé pour déterminer la température selon

$$T = \frac{\frac{q}{k} \cdot \Delta U_D}{In(I_{D,1}) - In(I_{D,2})},$$

q signifiant la charge élémentaire, k la constante de Boltzmann et $\Delta UT_D$ une différence des au moins deux tensions différentes ($U_{D,1}$; $U_{D,2}$).

**11.** Dispositif selon l'une des revendications précédentes, dans lequel le moyen (104) destiné à déterminer la valeur de mesure est réalisé pour compenser l'échauffement propre provoqué par un flux de courant à travers la diode (102).

**12.** Dispositif selon la revendication 11, dans lequel le moyen (104) destiné à déterminer la valeur de mesure est réalisé pour compenser l'échauffement propre de la diode au moyen d'un facteur de correction.

**13.** Dispositif selon la revendication 11, dans lequel le moyen (104) destiné à déterminer la valeur de mesure est réalisé pour compenser l'échauffement propre de la diode (102) en déterminant, par de multiples mesures d'un courant de diode ($I_{D,1}$; $I_{D,2}$) à différentes températures et chaque fois à la même tension ($U_{D,1}$; $U_{D,2}$), un courant de diode moyen à une température moyenne ($T_m$).

**14.** Dispositif selon la revendication 11, dans lequel le moyen (104) destiné à déterminer la valeur de mesure est réalisé pour compenser l'échauffement propre de la diode (102) en déterminant, par de multiples mesures de la tension de diode ($U_{D,1}$; $U_{D,2}$) à différentes températures et chaque fois au même courant ($I_{D,1}$; $I_{D,2}$), une tension de diode moyenne à une température moyenne ($T_m$).

**15.** Dispositif selon l'une des revendications précédentes, avec une deuxième structure de diode qui présente une deuxième diode, mais est blindée contre le, ou est insensible au, rayonnement électromagnétique, et un moyen pour déterminer une température pour la deuxième diode au moyen d'au moins deux mesures de courant/tension à la deuxième diode pour différentes paires d'un courant de diode ($I_{D,1}$; $I_{D,2}$) et d'une tension de diode ($U_{D,1}$; $U_{D,2}$).

**16.** Dispositif selon la revendication 15, dans lequel le dispositif présente plus de structures de diode agissant de manière absorbante que de deuxièmes structures de diode blindées ou insensibles.

**17.** Procédé pour détecter un rayonnement électromagnétique (18), aux étapes suivantes consistant à:

absorber le rayonnement électromagnétique (18) par une structure de diode (102) agissant de manière absorbante pour un rayonnement électromagnétique (18) et présentant une diode; et
déterminer une valeur de mesure pour le rayonnement électromagnétique absorbée (18) au moyen d'au moins deux mesures de courant/tension à la diode (102) pour différentes paires d'un courant de diode ($I_{D,1}$; $I_{D,2}$) et une tension de diode ($U_{D,1}$; $U_{D,2}$), la valeur de mesure étant déterminée à l'aide de la dépendance de température entre la tension de diode et le courant de diode.

**18.** Programme d'ordinateur avec un code de programme pour réaliser le procédé selon la revendication 17 lorsque le programme d'ordinateur est exécuté sur un ordinateur et/ou un microcontrôleur.

E-M-Strahlung

10

12

18

16

14

FIG 1

FIG 2

Absorbieren e.-m.
Strahlung mit einer Diode — S1

Ermitteln eines Messwerts für die
e.-m. Strahlung mittels wenigstens
. zweier Strom- / Spannungsmessungen an der Diode — S2

— S3

FIG 3

FIG 4

$$\boxed{\begin{array}{c} \text{Bestimmen von } U_{D,1}(T) \\ \text{bei } I_{Bias,1}(T) \end{array}} \quad \sim\!\!\text{S51}$$

$$\downarrow$$

$$\boxed{\begin{array}{c} \text{Bestimmen von } U_{D,2}(T) \\ \text{bei } I_{Bias,2}(T) \end{array}} \quad \sim\!\!\text{S52}$$

$$\downarrow$$

$$\boxed{\begin{array}{c} \text{Ermitteln der Temperatur} \\ T \text{ basierend auf } \Delta U_D \end{array}} \quad \sim\!\!\text{S53}$$

$$\downarrow$$

$$\boxed{\begin{array}{c} \text{Umrechnen von Temperatur auf} \\ \text{Energie - oder Leistungsdichte} \\ \text{der e.-m. Strahlung} \end{array}} \quad \sim\!\!\text{S54}$$

## FIG 5

FIG 6

Bestimmen von $I_{D,1}(U_{D,1},T)$
bei $U_{D,1}$ — S71

Bestimmen von $I_{D,2}(U_{D,2},T)$
bei $U_{D,2}$ — S72

Ermitteln von T basierend auf
$\Delta U_D$ und $\dfrac{I_{D,1}}{I_{D,2}}$ — S73

Umrechnen der Temperatur auf
Energie - oder Leistungsdichte
der e.-m. Strahlung — S74

## FIG 7

$$I_{D,1,2}$$

$$102$$

$$E\text{-}M$$

$$U_{D,1,2}$$

$$164$$

$$170$$

$$U_{D,1}$$

$$172$$

$$U_{D,2}$$

$$100$$

$$104$$

FIG 8

FIG 9

FIG 10

EP 2 147 288 B1

FIG 11